# FASCICULE DE BREVET EUROPEEN

(11) **EP 3 087 346 B1**
(45) Date de publication et mention de la délivrance du brevet: **11.05.2022**
(21) Numéro de dépôt: 14830989.1
(22) Date de dépôt: 19.12.2014
(51) Int. Cl.: G01D 4/00, H04W 4/80, G01D 9/00, H04Q 9/00

(54) **GESTION DU FONCTIONNEMENT D'UN ÉQUIPEMENT PROTÉGÉ**
VERWALTUNG DES BETRIEBS EINER GESCHÜTZTEN EINHEIT
MANAGEMENT OF THE OPERATION OF A PROTECTED ENTITY

(30) Priorité: 26.12.2013 FR 1363584
(43) Date de publication de la demande: 02.11.2016
(73) Titulaire: GRDF, 75009 Paris (FR)
(72) Inventeur: HERBRON, Jean René, F-78420 Carrière-sur-Seine (FR); VIALLE, Alexandre, F-75015 Paris (FR)
(74) Mandataire: Fédit-Loriot
(86) Numéro de dépôt international: PCT/FR2014/053469
(87) Numéro de publication internationale: WO 2015/097382

(56) Documents cités:
- WO-A1-2014/099147
- WO-A2-03/025878
- CA-A1- 2 525 962

## Description

La présente invention se rapporte à la gestion du fonctionnement d'un équipement protégé, c'est-à-dire conçu pour empêcher l'accès matériel aux circuits électriques de l'équipement, par exemple un dispositif de comptage, ou compteur, d'une installation de télérelève.

Une installation de télérelève comprend classiquement plusieurs dispositifs de comptage, par exemple des compteurs d'eau, ainsi que des systèmes de passerelle, ou répéteurs, communiquant d'une part avec les dispositifs de comptage et d'autre part avec un réseau de télécommunications externe. Les compteurs comprennent un module radiofréquences, pour communiquer avec le ou les systèmes de passerelle voisin(s). Ce module radiofréquences peut par exemple émettre des ondes de relativement courte portée, par exemple à 169 MHz, ou bien encore à 433 MHz ou 868 MHz.

Il existe des compteurs alimentés par le secteur, voire par une pile externe remplaçable. Les documents WO 2003/025878 et CA 2 525 962 décrivent de tels compteurs.

L'invention concerne les compteurs alimentés par une pile ou équivalent, située à l'intérieur du boitier du compteur et destinée à fonctionner pendant toute la vie du compteur, typiquement une période de temps de l'ordre de 15 à 20 ans.

La pile électrique alimente des moyens de traitement, comprenant par exemple un microcontrôleur, dont le fonctionnement nominal est optimisé pour limiter la consommation d'énergie.

Typiquement, en fonctionnement nominal, le microcontrôleur est en général dans un état de veille, dont il sort régulièrement, par exemple journellement, pour commander l'émission d'une trame de comptage transportant des données de comptage, par exemple une valeur de volume d'eau consommée.

Ces données de comptage sont reçues par un ou plusieurs répéteurs, en vue d'une transmission vers un serveur distant. Ce serveur peut effectuer une analyse des données ainsi collectées par exemple afin de détecter les fuites éventuelles ou autres défaillances, et également à des fins de facturation client.

Suite à l'émission d'une trame de comptage, le compteur se place dans un état de réception pendant un laps de temps prédéterminé, de par exemple plusieurs secondes. Pendant ce laps de temps, le compteur peut recevoir des messages, par exemple des messages de lecture mémoire, ou bien encore des messages de reconfiguration.

Ainsi, en mode nominal, c'est le compteur qui initie les communications. Lorsque le microcontrôleur n'effectue pas les opérations attendues en mode nominal, par exemple en cas de défaillance, de fin de vie de la pile, ou bien encore en début de vie du compteur, il peut être relativement délicat voire impossible de communiquer avec le microcontrôleur.

On pourrait envisager de remplacer le boitier étanche des compteurs par un boitier avec un port filaire, afin de permettre à un opérateur de raccorder le microcontrôleur à un système d'analyse externe, par exemple un ordinateur portable. Néanmoins, cette solution risque de conduire à des reprogrammations non souhaitées du microcontrôleur et plus généralement à des fraudes ou des détériorations du compteur et à un risque de corrosion de la prise de communication.

On pourrait aussi envisager de limiter la durée de veille du microcontrôleur. Mais, outre le fait que cette solution risque de s'avérer coûteuse énergétiquement parlant, il reste qu'en cas de défaillance de la pile, et notamment en fin de vie, il n'est plus possible d'établir de communication avec le microcontrôleur sans démontage du boitier du compteur. Or ce démontage peut être relativement délicat à mener sans endommager le microcontrôleur, car de fait, les compteurs sont conçus pour limiter les accès utilisateur.

Il existe donc un besoin pour une solution qui permettrait de faciliter les communications avec un équipement protégé en cas de défaillance de cet équipement, et ce sans préjudice de la durée de vie ni de la sécurité.

Il est proposé un équipement de télé-relève selon la revendication 1, comprenant :
- des moyens de traitement agencés pour effectuer des opérations nominales de cet équipement, par exemple émettre régulièrement des trames de comptage et se placer ensuite dans un état d'écoute,
   des premiers moyens d'émission et de réception radiofréquences aptes à être commandés par lesdits moyens de traitement ;
   dans lequel équipement les moyens de traitement sont programmés pour, en fonctionnement nominal, commander lesdits premiers moyens d'émission et de réception radiofréquences de sorte à initier les communications avec l'extérieur en commandant l'émission d'une trame de comptage transportant des données de comptage d'une installation de télérelève ; ledit équipement de télérelève comprenant en outre :
- des moyens de stockage d'énergie, par exemple une pile, conçus pour alimenter en énergie les moyens de traitement, et
- un boitier, à l'intérieur duquel sont installés les moyens de traitement et les moyens de stockage d'énergie, ce boitier étant conformé pour empêcher l'accès matériel c'est-à-dire à la fois physique et filaire, auxdits moyens de traitement et auxdits moyens de stockage d'énergie, c'est-à-dire que le boitier est conçu pour que son ouverture entraine des effets irréversibles et est conformé pour que l'équipement soit dénué de moyens de raccordement filaire entre les moyens de traitement ou les moyens de stockage et l'extérieur ;

Selon l'invention, l'équipement comprend en outre :
- une mémoire distincte des moyens de traitement, avantageusement une mémoire non volatile, en communication avec ces moyens de traitement, pour stocker des valeurs de paramètres de fonctionnement des moyens de traitement,
   les moyens de traitement étant agencés, pour, en mode nominal, procéder régulièrement à des opérations d'écriture dans la mémoire de valeurs de paramètre de fonctionnement. Par exemple, un microcontrôleur d'un dispositif de comptage peut régulièrement stocker dans la mémoire une valeur mesurée par un module en communication avec les moyens de traitement et reçue par ces moyens de traitement, par exemple une valeur de volume d'eau transmise par ailleurs à un système de passerelle.

Lesdites valeurs écrites dans la mémoire comprennent des valeurs de données de comptage mesurée par un module de comptage en communication avec les moyens de traitement, et reçues par lesdits moyens de traitement. ledit équipement comportant aussi :
- un dispositif interface comprenant des seconds moyens de réception radiofréquences, et un circuit électronique apte à fonctionner en utilisant l'énergie issue de ces seconds moyens de réception radiofréquences, pour effectuer des opérations de lecture et/ou écriture de la mémoire.
ledit équipement étant agencé pour que :
- suite à la réception par les seconds moyens de réception radiofréquences du dispositif interface, de signaux radiofréquences transportant des données de commande d'écriture comprenant des valeurs de paramètres de fonctionnement des moyens de traitement, ledit circuit électronique dudit dispositif interface procède à une écriture des valeurs ainsi reçues dans la mémoire, afin de commander le fonctionnement des moyens de traitement lesdites valeurs écrite comprenant une date de passage dans un mode de fonctionnement nominal dans lequel les moyens de traitement effectuent les opérations nominales. Ainsi, il est possible de programmer le démarrage en mode nominal. Ceci peut s'avérer intéressant en ce sens que le mode initial peut être conçu de façon à consommer moins d'énergie que le mode nominal. Ainsi, on peut retarder le passage en mode nominal qui peut permettre d'augmenter la durée de vie du compteur.

L'équipement est par ailleurs agencé pour que,
- suite à la réception d'un signal électromagnétique transportant des données de commande de lecture, le dispositif interface effectue une opération de lecture des valeurs de paramètres de fonctionnement stockées dans la mémoire non volatile, puis une opération de génération d'un signal radiofréquences à partir des valeurs ainsi lues. Cette émission radiofréquences des données lues peut être effectuée via les moyens d'émission du dispositif interface, ou bien via d'autres moyens d'émissions radiofréquences, par exemple des moyens d'émissions utilisés en mode nominal.

Ainsi, l'opérateur peut effectuer des opérations de lecture et/ou écriture de cette mémoire, et ce sans risquer d'endommager le boitier de cet équipement. Il lui suffit en effet de commander l'émission d'une onde radiofréquences pour alimenter le circuit électronique et ainsi accéder à des valeurs de paramètres de fonctionnement des moyens de traitement.

Par accès matériel, on entend à la fois accès physique, c'est à dire que le boitier est conçu pour que son ouverture entraîne des effets irréversibles, par exemple l'impossibilité de refermer le boîtier, et accès filaire, c'est-à-dire que le boîtier est conformé pour que l'équipement soit dénué de moyens de raccordement filaires entre les moyens de traitement ou les moyens de stockage et l'extérieur. En particulier, l'équipement est dénué de moyens de raccordement au secteur et de moyens de raccordement à un processeur externe, par exemple un port USB (de l'anglais « Universal Serial Bus ») ou autre.

Le boîtier peut par exemple être étanche.

Les moyens de traitement peuvent par exemple comprendre un ou plusieurs processeurs, par exemple un microcontrôleur, ou autre.

Les moyens de traitement sont programmés pour, en fonctionnement nominal, initier les communications avec l'extérieur. L'invention peut s'avérer particulièrement intéressante hors fonctionnement nominal, notamment en cas de défaillance de ces moyens de traitement, car le dispositif interface peut permettre un accès à ces moyens protégés à l'intérieur du boitier et alors muets. L'invention peut ainsi faciliter le diagnostic d'une défaillance de l'équipement.

Les moyens de stockage d'énergie peuvent par exemple comprendre une pile, en particulier une pile non rechargeable, une batterie, en particulier une batterie non rechargeable, un accumulateur, ou autre.

La mémoire non volatile peut par exemple comprendre une mémoire EEPROM (de l'anglais « Electrically Erasable Programable Read Only Memory ») ou bien toute autre mémoire susceptible d'être programmée plusieurs fois et qui ne s'efface pas lorsque non alimentée en électricité.

La mémoire est distincte des, et en communication avec les moyens de traitement, c'est-à-dire que la mémoire n'est pas sollicitée pour effectuer les opérations nominales de l'équipement, du type génération de trames de comptage.

Cette mémoire peut être reliée par des moyens de communications filaires, par exemple un ou plusieurs fils aux moyens de traitement, et peut permettre de stocker des paramètres de fonctionnement de ces moyens de traitement, par exemple une valeur de volume d'eau transmise, une valeur de fréquence de sortie de veille en mode nominal, une date d'entrée dans le mode nominal, ou autre. De manière générale l'invention n'est pas limitée par la nature des paramètres de fonctionnement dont les valeurs sont susceptibles d'être stockées dans cette mémoire.

Les paramètres de fonctionnement peuvent par exemple comprendre :
- des données de comptage, par exemple un volume d'eau, une valeur de consommation d'électricité, ou autre,
- au moins un paramètre relatif à l'utilisation effective de l'équipement, par exemple des mesures issues de capteurs supplémentaires, par exemple un capteur de température, un capteur d'humidité, ou autre, des paramètres d'état des moyens de traitement et/ou de stockage, par exemple un état de charge batterie, une somme de contrôle (« checksum » en anglais) issue des moyens de traitement, des paramètres d'activité des moyens de traitement et/ou de stockage, par exemple une fréquence effective d'émission de messages de relève, une durée effective d'une fenêtre d'écoute, ou autre, et/ou
- au moins un paramètre de programmation, par exemple un bit de mode, une fréquence d'émission de messages à respecter, une durée d'écoute à respecter, ou autre, et/ou d'autres paramètres.

La lecture des données de comptage peut permettre d'effectuer un dernier relevé en cas de défaillance des moyens installés dans le boitier.

La lecture des paramètres relatifs à l'utilisation de l'équipement, des paramètres d'état et/ou des paramètres d'activité peut par exemple faciliter l'établissement d'un diagnostic en cas de défaillance de l'équipement.

L'écriture des paramètres de programmation peut permettre de programmer les moyens de traitement nominaux.

Les moyens de réception radiofréquences du dispositif interface peuvent par exemple comprendre une antenne.

Le circuit électronique du dispositif interface peut par exemple comprendre une puce ou autre.

Le dispositif interface peut avantageusement comprendre une interface de communication en champ proche ou NFC (de l'anglais « Near Field Communication »). Ainsi, les signaux radiofréquences reçus par les moyens de réception peuvent servir à la fois pour alimenter le circuit électronique en énergie et pour fournir des donnée à traiter à l'équipement.

Peuvent également être inscrites des valeurs d'autres paramètres, par exemple une valeur d'un paramètre indiquant un état de la pile.

Le dispositif interface comprend en outre des seconds moyens d'émission radiofréquences, ces moyens étant aptes à fonctionner en utilisant l'énergie issue des moyens de réception radiofréquences. Ces moyens d'émissions radiofréquences peuvent par exemple être confondus ou non avec les moyens de réception radiofréquences du dispositif interface. Les moyens d'émissions peuvent par exemple comprendre une antenne confondue avec l'antenne des moyens de réception radiofréquences, et des moyens d'élaboration d'un signal radiofréquences en communication avec l'antenne, par exemple le circuit électronique.

Avantageusement, l'équipement peut être agencé pour pouvoir générer des messages à émettre via les moyens d'émission radiofréquences sans solliciter les moyens de traitement ni les moyens de stockage d'énergie. Par exemple, le circuit électronique peut, toujours en utilisant l'énergie des signaux reçus, et après lecture de la mémoire, générer les trames à émettre. Des trames NFC peuvent ainsi être émises lorsque les moyens de traitement et/ou les moyens de stockage d'énergie sont défaillants.

Dit autrement, un opérateur peut, sans accès matériel à l'équipement, lire les données stockées dans la mémoire non volatile, en particulier lorsque l'équipement est défaillant. Cette lecture de la mémoire peut ainsi permettre d'analyser et de comprendre les raisons de la défaillance.

L'invention peut ainsi trouver une application particulièrement intéressante en fin de vie de l'équipement. Le choix d'une mémoire non volatile, plutôt que d'une mémoire volatile, s'avère alors particulièrement judicieux dans la mesure où les données restent stockées en mémoire malgré l'absence éventuelle d'alimentation.

Toutefois, l'invention n'exclut pas le choix d'une mémoire volatile.

L'invention peut trouver une autre application intéressante en début de vie de l'équipement, lorsque les moyens de traitement ne sont pas encore dans le mode nominal de fonctionnement.

Le circuit électronique des seconds moyens de réception radiofréquence peut par exemple commander en outre la programmation des moyens de traitement à partir des données reçues.

La mémoire et les moyens de traitement peuvent être intégrés dans un seul processeur, ou non, pourvu que la mémoire reste distincte des moyens de traitement utilisés pour les opérations nominales de l'équipement.

La mémoire est distincte du processeur intégrant les moyens de traitement.

Par exemple, les moyens de traitement peuvent être programmés pour être par défaut dans un mode initial, dans lequel les opérations effectuées comprennent simplement des opérations de sortie de veille régulière et de lecture de la mémoire, cette mémoire permettant de stocker une valeur de bit de mode. Lorsque, suite à une opération d'écriture effectuée suite à la réception d'un signal radiofréquences via le dispositif interface, le bit de mode est passé d'une valeur correspondant au mode initial à une valeur correspondant au mode nominal, les moyens de traitement adoptent le mode nominal. Ainsi, il est possible de piloter le passage au mode nominal depuis l'extérieur.

L'invention n'est pas limitée par la nature de l'équipement, pourvu que les accès matériels aux moyens de traitement et aux moyens de stockage d'énergie de cet équipement soit restreints et de préférence impossibles ou quasi impossibles sans détérioration matérielle.

Par exemple l'équipement peut comprendre un dispositif de comptage d'une installation de télérelève, un répéteur d'une installation de télérelève, par exemple un dispositif d'émission/réception radiofréquences d'un système de passerelle, ce dispositif d'émission/réception radiofréquences étant utilisé pour les communications radiofréquences avec un module radiofréquences du dispositif de comptage.

L'équipement pourrait alternativement ou en complément comprendre un ou plusieurs capteurs, ou autre.

Dans le cas d'un dispositif de comptage, l'équipement peut comprendre en outre un module de comptage, par exemple un module de comptage de fluide, par exemple un module de comptage d'eau, de gaz ou autre, ou bien encore un module de comptage d'électricité.

Il est en outre proposé une installation de télérelève de compteurs selon la revendication 7, comprenant une pluralité d'équipements tels que décrits ci-dessus, et au moins un système de passerelle en communication d'une part avec au moins un équipement, et d'autre part avec un réseau de télécommunications.

Il est en outre proposé un procédé selon la revendication 8, mis en œuvre par un circuit électronique d'un dispositif interface d'un équipement comprenant en outre des moyens de traitement agencés pour effectuer des opérations nominales de cet équipement, des moyens de stockage d'énergie pour alimenter en énergie les moyens de traitement, un boitier, à l'intérieur duquel sont installés les moyens de traitement et les moyens de stockage d'énergie, ledit boitier étant conformé pour empêcher l'accès matériel auxdits moyens de traitement et auxdits moyens de stockage d'énergie, une mémoire en communication avec les moyens de traitement, le dispositif interface comprenant en outre des moyens de réception radiofréquences, le circuit électronique étant apte à fonctionner en utilisant l'énergie issue desdits moyens de réception radiofréquences, le procédé comprenant
- effectuer des opérations de lecture et/ou écriture dans la mémoire de valeurs de paramètres de fonctionnement desdits moyens de traitement.

L'invention sera mieux comprise en référence aux figures, lesquelles illustrent des modes de réalisation donnés à titre d'exemple et non limitatifs.

La figure 1 montre schématiquement un exemple d'équipement selon un mode de réalisation de l'invention, les différentes flèches correspondant à un exemple de procédé utilisable dans cet équipement.

La figure 2 montre le même équipement, avec d'autres transferts de signaux, afin d'illustrer un autre exemple d'application de l'invention.

Des références identiques pourront être utilisées d'une figure à l'autre pour désigner des éléments identiques ou similaires, dans leur forme ou dans leur fonction.

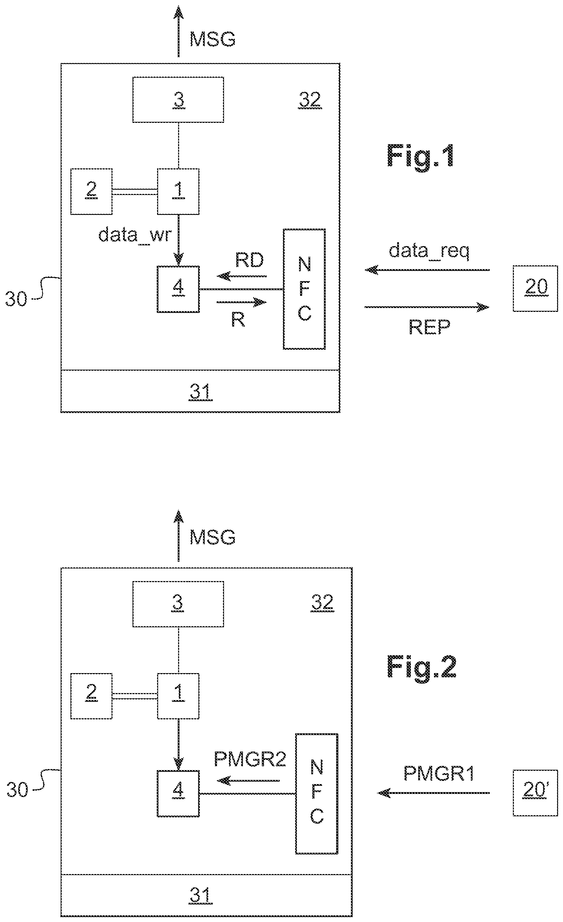

En référence à la figure 1, un équipement, par exemple un dispositif de comptage 30, par exemple un compteur d'eau, comprend un module de comptage 31, conformé de façon connue en soi pour mesurer un volume d'eau consommé. Le compteur d'eau 30 comprend en outre un module radiofréquences 32 conçu pour transmettre vers un système de passerelle (non représenté) des valeurs de volume d'eau consommée issues du module de comptage 31. Des moyens de traitement, ici un microcontrôleur 1, se chargent de piloter ces opérations, dites nominales.

Ces moyens de traitement 1 sont alimentés par une pile 2, par exemple une pile lithium non rechargeable.

En mode nominal, le microcontrôleur 1 commande ainsi des premiers moyens d'émission/réception radiofréquences 3, comprenant par exemple une antenne non représentée, pour que ces premiers moyens 3 émettent des signaux sans fil MSG, par exemple des signaux à 169 MHz, 433 MHz, ou 866 Mhz.

Le boîtier du compteur 30 est conformé pour interdire tout accès matériel à ces différents moyens 1, 2, 3 et 4. Ainsi, le compteur 30 est dénué de tout port filaire, et le compteur 30 est conçu de façon à ne pas pouvoir être ouvert sans endommager le microcontrôleur 1. Le boîtier du compteur 30 peut en particulier être étanche.

Ainsi, si ce compteur 30 s'avère défaillant, il est malaisé de démonter ce compteur du fait du traitement effectué pour obtenir l'étanchéité. Ce traitement peut par exemple être réalisé par résinage de matière composite, relativement difficile à retirer sans endommager le microcontrôleur 1. En outre, cette opération de démontage doit en général s'effectuer en atelier, ce qui peut s'avérer relativement long, fastidieux et coûteux.

Compte-tenu de ces contraintes, dans l'art antérieur, il y a de fortes chances que suite à un arrêt du compteur 30, on ne dispose d'aucune information susceptible d'expliquer cette panne. En outre, des données de comptage risquent d'être perdues.

Dans le mode de réalisation de l'invention représenté sur les figures 1 et 2, le compteur 1 comprend un dispositif interface NFC et une mémoire non volatile 4. Cette mémoire non volatile 4 est raccordée par une interface filaire, par exemple I²C, au microcontrôleur 1.

La mémoire 4 peut avoir une taille de par exemple 2 kilo octets. Il peut par exemple s'agir d'une mémoire EEPROM.

Cette mémoire 4 est en outre en communication, par une liaison filaire, avec le dispositif interface NFC.

Le dispositif interface NFC peut être une interface de communication en champ proche, et en particulier être conforme à la norme ISO 15693 ou ISO 14443.

En fonctionnement nominal, le microcontrôleur 1, effectue des opérations d'écriture de trames data_wr dans la mémoire volatile 4. En particulier, des valeurs de données de consommation d'eau ainsi que des valeurs de température mesurées par un capteur non représenté sont enregistrées périodiquement dans cette mémoire 4.

En cas de défaillance, un opérateur non représenté, mais pilotant un terminal 20 équipé de moyens d'émission/réception radiofréquences non représentés, peut venir à proximité du compteur 30, par exemple à quelques centimètres ou quelques dizaines de centimètres. Cet opérateur peut demander, via une interface utilisateur non représentée de ce terminal 20, l'émission d'une trame radiofréquences data_req intégrant des données de commande de lecture.

Cette trame radiofréquences data_req est reçue par des moyens de réception non représentés de l'interface NFC.

Un circuit électronique non représenté de l'interface NFC profite alors de l'énergie apportée par les signaux physiques correspondant à cette trame data_req pour effectuer une opération de lecture des données stockées dans la mémoire volatile 4. Plus précisément, le circuit électronique envoie un message RD de lecture et reçoit un message R de réponse intégrant des valeurs de paramètres de fonctionnement lues dans la mémoire 4.

Une ou plusieurs trames radiofréquences REP sont générées en fonction des valeurs lues. Ces trames radiofréquences REP sont reçues par le terminal 20.

Dit autrement, la mémoire non volatile 4 peut être interrogée via l'interface NFC, afin de fournir les dernières valeurs de volume d'eau consommée, et ainsi éventuellement que d'autres valeurs, par exemple des valeurs de température ou autre. Ces données peuvent permettre à l'opérateur de diagnostiquer la raison de la panne.

L'ensemble des données ainsi collectées par l'interface NFC suite à des défaillances des compteurs d'un parc pourrait même être exploité à des fins statistiques afin de comprendre les causes de ces défaillances.

L'invention peut ainsi permettre un diagnostic des défaillances liées à une usure prématurée de la pile 2, par exemple du fait d'utilisation dans des conditions de température inadaptées. En particulier, la pile 2 peut subir une autodécharge accélérée lorsque la température atteint des seuils hauts plus fréquemment que prévu. De la même façon, l'invention peut permettre d'attribuer une panne à des conditions de gel, ou bien encore à un défaut d'étanchéité, en particulier, lorsque les valeurs stockées dans la mémoire 4 comprennent des données issues d'un capteur d'humidité.

Ces différents diagnostics peuvent permettre de corriger les défauts constatés sur le parc installé en anticipant un remplacement. On pourra en outre prévoir d'adapter les nouveaux produits en modifiant leur conception.

Avantageusement et de façon non limitative, les moyens de traitement 1 peuvent être alimentés à partir de l'énergie issue des moyens de réception du dispositif interface NFC. Dit autrement, ce dispositif interface NFC peut permettre de réveiller à la fois son propre circuit électronique et le microcontrôleur 1.

La figure 2 illustre une autre utilisation de l'équipement selon le mode de réalisation de la figure 1.

Dans l'art antérieur, lorsqu'un nouveau compteur est installé par exemple dans une habitation, un opérateur peut avoir besoin d'accéder aux moyens de traitement de ce compteur, afin d'imposer le mode nominal de fonctionnement. L'opérateur doit ainsi prendre le temps et consacrer l'attention nécessaire à ce paramétrage. Il pourrait être envisagé d'imposer un mode nominal en usine, mais les temps perdus en transport et stockage entraîneraient une consommation inutile de la pile du compteur ainsi qu'un risque de saturation des bandes hertziennes à proximité des lieux de stockage.

Dans le mode de réalisation de l'invention représenté, grâce à la présence de la mémoire non volatile 4 et du dispositif interface NFC, le passage d'un mode initial, par exemple d'un mode dit de stockage, au mode nominal peut être programmé, ce qui peut permettre d'éviter les inconvénients liés aux systèmes de l'art antérieur.

Ainsi, dans le mode de réalisation représenté, on peut prévoir qu'en mode stockage, le microcontrôleur 1 sorte périodiquement d'un état de veille pour effectuer une opération de lecture de la mémoire non volatile 4. Par exemple, une valeur de date de passage en mode nominal peut être lue, et comparée à une valeur de date courante. Si la valeur de date lue est antérieure ou égale à la valeur de date courante, alors les moyens de traitement passent en mode nominal.

Le compteur peut ainsi être activé à la fabrication. L'interface NFC peut être utilisée en usine pour programmer une date de passage en mode nominal, et éventuellement pour programmer d'autres paramètres. On peut ainsi personnaliser le compteur.

En fin de production, le compteur peut être emballé et expédié en centre logistique. Dans ce centre logistique, les ensembles de compteurs ainsi emballés peuvent être là encore paramétrés, sans déballage, à l'aide d'un lecteur d'un terminal 20' adéquat.

Ce terminal 20' peut par exemple comprendre une antenne d'une surface relativement élevée, par exemple de près d'1 m².

Les paramètres ainsi programmés peuvent comprendre une périodicité des envois de trame de comptage MSG en mode nominal, une date préprogrammée de passage en mode nominal ou autre.

Ainsi, on prépare le déploiement de l'ensemble de ces compteurs en limitant les opérations à effectuer lors de l'installation dans le logement. A la date ainsi préprogrammée, le compteur passera automatiquement en mode nominal, ce mode nominal pouvant être personnalisé en fonction des données ainsi programmées.

Plus précisément, lors de la programmation, le terminal 20' peut émettre une requête PMGR1 de programmation. Cette requête permet de réveiller le circuit électronique de l'interface NFC et d'imposer à ce circuit la transmission de données de programmation PMGR2 sur la voie filaire entre le dispositif interface NFC et la mémoire non volatile 4.

La mémoire non volatile 4 se voit ainsi écrite. On stocke notamment dans cette mémoire non volatile 4 une date de passage en mode nominal.

En mode initial, le microcontrôleur 1 sort régulièrement de l'état de veille pour effectuer une lecture de la mémoire non volatile 4 et pour, le cas échéant, passer en mode nominal, en fonction des données lues dans cette mémoire non volatile 4. Ces opérations de lecture et de traitement subséquent étant moins consommatrices en énergie que les opérations liées à une émission radiofréquences via les moyens d'émission/réception radiofréquences 3, on comprendra que le mode initial est plus économe en énergie que le mode nominal. Il peut ainsi être intéressant de retarder le passage au mode nominal.

Une fois en mode nominal, le microcontrôleur 1 sauvegarde dans la mémoire 4 les paramètres importants relatifs à la vie du compteur 1, notamment les différents temps passés à différents paliers de température et les derniers historiques de données de comptages envoyés vers le système de passerelle ainsi que les dates de ces envois. En cas d'arrêt subi de fonctionnement du compteur 30, il sera toujours possible de lire une telle zone de paramètres techniques, via l'interface NFC.

L'invention peut être mise en œuvre sans solliciter les moyens de traitement lors des opérations consécutives à la réception d'un signal sur l'interface NFC. Ainsi, des trames NFC peuvent être émises même si les moyens de traitement nominaux sont défaillants ou en veille.

On peut toutefois prévoir que le microcontrôleur 1 soit réveillé par le circuit électronique et/ou par le composant mémoire 4 dès qu'une opération de lecture ou d'écriture s'opère sur l'interface NFC. Ceci permet de s'abstenir de consommer l'énergie de la pile lorsque cette interface est inactive.

L'invention permet en outre une interrogation des compteurs, alors que ces compteurs sont emballés. L'invention permet d'établir un dialogue pour effectuer une pré-configuration avant l'installation. La portée du lecteur NFC 20' étant proportionnelle à la diagonale de son antenne, cette portée peut atteindre plusieurs dizaines de centimètres. L'invention peut ainsi permettre de recenser des dispositifs dans le champ du lecteur.

On pourra prévoir des procédures d'anticollision pour un adressage un par un de chaque appareil, ce qui peut permettre d'éviter de séparer géographiquement ces appareils les uns des autres dans leur emballage.

On pourra ainsi programmer une mise en route nominale avant installation, ce qui permet d'éviter aux installateurs de devoir programmer les appareils après installation.

En cas de défaillance, l'invention peut ainsi permettre de retrouver les dernières données de comptage qu'aura tenté d'envoyer le compteur 30, et également de comprendre les raisons de cette défaillance prématurée.

Par exemple, on pourra établir des profils de température qui auraient pu être défavorables pour la pile. Ces données sont lisibles, car la mémoire 4 est alimentée par le lecteur NFC 20, 20', durant la lecture. Les temps de lecture de cette zone mémoire 4 peuvent être de quelques centaines de millisecondes.

L'invention a été ici décrite en référence à des compteurs d'eau, mais elle pourrait trouver d'autres applications, notamment relatives au compteur d'électricité, en particulier dans le cas d'une panne électronique totale de la partie contrôle de ces compteurs. L'invention pourrait trouver aussi une application dans le domaine des capteurs industriels, par exemple des capteurs de débit, de pression de température d'humidité du niveau de vitesse, des capteurs acoustiques, des capteurs de productivité, de turbidité, de mesure de PH, de taux H₂S. L'invention pourrait aussi trouver une application relative aux capteurs dans l'habitat, ou au capteur des activités tertiaires, par exemple des capteurs de détection d'intrusion de fumée, de monoxyde de carbone, ou autre.

L'équipement protégé pourrait être un autre équipement d'une installation de télérelève, par exemple un actionneur, une passerelle ou autre.

## Revendications

1. Equipement de télérelève (30) comprenant
des moyens de traitement (1) agencés pour effectuer des opérations nominales de cet équipement,
des premiers moyens d'émission et de réception radiofréquences (3) aptes à être commandés par lesdits moyens de traitement (1) ;
dans lequel équipement les moyens de traitement sont programmés pour, en fonctionnement nominal, commander lesdits premiers moyens d'émission et de réception radiofréquences (3) de sorte à initier les communications avec l'extérieur en commandant l'émission d'une trame de comptage transportant des données de comptage d'une installation de télérelève ; ledit équipement de télérelève (30) comprenant en outre :
des moyens de stockage d'énergie (2) pour alimenter en énergie les moyens de traitement,
un boitier, à l'intérieur duquel sont installés les moyens de traitement et les moyens de stockage d'énergie, ledit boitier étant conformé pour empêcher l'accès matériel, c'est-à-dire à la fois physique et filaire, auxdits moyens de traitement et auxdits moyens de stockage d'énergie, c'est-à-dire que le boitier est conçu pour que son ouverture entraine des effets irréversibles et est conformé pour que l'équipement soit dénué de moyens de raccordement filaire entre les moyens de traitement ou les moyens de stockage et l'extérieur ;
une mémoire (4) distincte des moyens de traitement et en communication avec lesdits moyens de traitement, pour stocker des valeurs de paramètres de fonctionnement des moyens de traitement ;
les moyens de traitement (1) étant agencés, pour, en mode nominal, procéder régulièrement à des opérations d'écriture dans la mémoire (4) de valeurs de paramètre de fonctionnement, lesdites valeurs écrites dans la mémoire (4) comprenant des valeurs de données de comptage mesurée par un module de comptage (31) en communication avec les moyens de traitement (1), et reçues par lesdits moyens de traitement ;
ledit équipement (30) comportant aussi un dispositif interface (NFC) comprenant des seconds moyens de réception radiofréquences et un circuit électronique apte à fonctionner en utilisant l'énergie issue desdits seconds moyens de réception radiofréquences, pour effectuer des opérations de lecture et/ou écriture de la mémoire ;
ledit équipement (30) étant agencé pour que :
- suite à la réception par les seconds moyens de réception radiofréquences du dispositif interface (NFC), de signaux radiofréquences transportant des données de commande d'écriture (PMGR1) comprenant des valeurs de paramètres de fonctionnement des moyens de traitement, ledit circuit électronique dudit dispositif interface (NFC) procède à une écriture des valeurs ainsi reçues dans la mémoire (4), afin de commander le fonctionnement des moyens de traitement (1), les valeurs ainsi écrites dans la mémoire (4) comprenant une date de passage dans un mode de fonctionnement nominal dans lequel les moyens de traitement effectuent les opérations nominales; et
- suite à la réception d'un signal électromagnétique transportant des données de commande de lecture (data_req), le dispositif interface (NFC) effectue une opération de lecture des valeurs de paramètres de fonctionnement stockées dans la mémoire (4), puis une opération de génération d'un signal radiofréquences (REP) à partir des valeurs ainsi lues.

2. Equipement (30) selon la revendication 1, dans lequel la mémoire (4) est une mémoire non volatile.

3. Equipement (30) selon l'une quelconque des revendications 1 ou 2, dans lequel le dispositif interface (NFC) comprend une interface de communication en champ proche.

4. Equipement (30) selon l'une quelconque des revendications précédentes, dans lequel la mémoire (4) est en communication filaire avec les moyens de traitement (1).

5. Equipement (30) selon l'une quelconque des revendications précédentes, ledit équipement étant agencé pour que les paramètres de fonctionnement stockés dans la mémoire (4) comprennent au moins un paramètre relatif à l'utilisation effective de l'équipement, de sorte que la lecture dudit au moins un paramètre peut faciliter un diagnostic de défaillance de l'équipement.

6. Equipement (30) selon l'une quelconque des revendications précédentes, dans lequel ledit équipement comprend en outre un module de comptage (31) pour mesurer une consommation de fluide ou d'électricité.

7. Installation de télérelève de compteurs comprenant une pluralité d'équipements (30) selon la revendication 6, et au moins un système de passerelle en communication d'une part avec au moins un équipement, et d'autre part avec un réseau de télécommunications.

8. Procédé mis en œuvre par un circuit électronique d'un dispositif interface (NFC) d'un équipement de télérelève (30) selon l'une quelconque des revendications 1 à 6, comprenant :
effectuer des opérations de lecture et/ou écriture dans la mémoire de valeurs de paramètres de fonctionnement desdits moyens de traitement, lesdites opérations de lecture et/ou écriture comprenant :
- suite à la réception par les seconds moyens de réception radiofréquences du dispositif interface (NFC), de signaux radiofréquences transportant des données de commande d'écriture (PMGR1) comprenant des valeurs de paramètres de fonctionnement des moyens de traitement, procéder à une écriture des valeurs ainsi reçues dans la mémoire (4), afin de commander le fonctionnement des moyens de traitement (1) ; et
- suite à la réception d'un signal électromagnétique transportant des données de commande de lecture (data_req), le dispositif interface (NFC) effectue une opération de lecture des valeurs de paramètres de fonctionnement stockées dans la mémoire non volatile (4), puis une opération de génération d'un signal radiofréquences (REP) à partir des valeurs ainsi lues.

## Patentansprüche

1. Fernauslesegerät (30), umfassend Verarbeitungsmittel (1), die angepasst sind, um nominale Vorgänge dieses Gerätes auszuführen,
erste Funkfrequenz-Sende- und Empfangsmittel (3), die imstande sind, von den Verarbeitungsmitteln (1) gesteuert zu werden;
wobei die Verarbeitungsmittel in dem Gerät programmiert sind, um im nominalen Betrieb die ersten Funkfrequenz-Sende- und Empfangsmittel (3) derart zu steuern, um die Kommunikationen mit dem Äußeren durch Steuern der Sendung eines Zählrasters einzuleiten, der Zähldaten einer Fernausleseanlage transportiert; wobei das Fernauslesegerät (30) weiter Folgendes umfasst:
Energiespeichermittel (2), um die Verarbeitungsmittel mit Energie zu versorgen,
ein Gehäuse, in dessen Inneren die Verarbeitungsmittel und die Energiespeichermittel installiert sind, wobei das Gehäuse ausgeführt ist, um den Hardwarezugriff, das heißt sowohl physisch, als auch drahtgebunden, auf die Verarbeitungsmittel und auf die Energiespeichermittel zu verhindern, das heißt, dass das Gehäuse gestaltet ist, damit dessen Öffnung unwiderrufliche Auswirkungen nach sich zieht, und ausgeführt ist, damit das Gerät über keinerlei Anschlussmittel für Kabel zwischen den Verarbeitungsmitteln oder den Speichermitteln und dem Äußeren verfügt;
einen Speicher (4), der sich von den Verarbeitungsmitteln unterscheidet, und in Kommunikation mit den Verarbeitungsmitteln, um Betriebsparameterwerte der Verarbeitungsmittel abzuspeichern;
wobei die Verarbeitungsmittel (1) angeordnet sind, um im Nominalmodus regelmäßig Schreibvorgänge von Betriebsparameterwerten in den Speicher (4) vorzunehmen, wobei die in den Speicher (4) geschriebenen Werte Zähldatenwerte umfassen, die durch ein Zählmodul (31) gemessen werden, welches in Kommunikation mit den Verarbeitungsmitteln (1) ist, und von den Verarbeitungsmitteln empfangen werden;
wobei das Gerät (30) auch eine Schnittstellenvorrichtung (NFC) beinhaltet, die zweite Funkfrequenzempfangsmittel und eine elektronische Schaltung umfasst, die imstande ist, durch Verwenden der Energie betrieben zu werden, die aus den zweiten Funkfrequenzempfangsmitteln stammt, um Lese- und/oder Schreibvorgänge des Speichers durchzuführen;
wobei das Gerät (30) angeordnet ist, damit:
- die elektronische Schaltung der Schnittstellenvorrichtung (NFC) nach dem Empfangen durch die zweiten Funkfrequenzempfangsmittel der Schnittstellenvorrichtung (NFC) von Funkfrequenzsignalen, die Schreibbefehlsdaten (PMGR1) transportieren, die Betriebsparameterwerte der Verarbeitungsmittel umfassen, ein Schreiben der so empfangenen Werte in den Speicher (4) vornimmt, um den Betrieb der Verarbeitungsmittel (1) zu befehlen, wobei die so in den Speicher (4) geschriebenen Werte ein Übergangsdatum in einen nominalen Betriebsmodus umfassen, in dem die Verarbeitungsmittel die nominalen Vorgänge durchführen; und
- die Schnittstellenvorrichtung (NFC) nach Empfang eines elektromagnetischen Signals, welches Lesebefehlsdaten (data_req) transportiert, einen Lesevorgang der Betriebsparameterwerte vornimmt, die in dem Speicher (4) abgespeichert sind, gefolgt von einem Erzeugungsvorgang eines Funkfrequenzsignals (REP) aus den so gelesenen Werten.

2. Gerät (30) nach Anspruch 1, wobei der Speicher (4) ein nicht flüchtiger Speicher ist.

3. Gerät (30) nach einem der Ansprüche 1 oder 2, wobei die Schnittstellenvorrichtung (NFC) eine Nahfeld-Kommunikationsschnittstelle ist.

4. Gerät (30) nach einem der vorstehenden Ansprüche, wobei der Speicher (4) in drahtgebundener Kommunikation mit den Verarbeitungsmitteln (1) ist.

5. Gerät (30) nach einem der vorstehenden Ansprüche, wobei das Gerät angeordnet ist, damit die im Speicher (4) abgespeicherten Betriebsparameter mindestens einen Parameter hinsichtlich der tatsächlichen Verwendung des Gerätes derart umfasst, dass das Lesen des mindestens einen Parameters eine Geräteausfalldiagnose erleichtern kann.

6. Gerät (30) nach einem der vorstehenden Ansprüche, wobei das Gerät weiter ein Zählmodul (31) zum Messen eines Flüssigkeits- oder Stromverbrauches umfasst.

7. Fernausleseanlage von Zählern, eine Vielzahl von Geräten (30) nach Anspruch 6 und mindestens ein Kommunikations-Gateway-System einerseits mit mindestens einem Gerät, und andererseits mit einem Telekommunikationsnetzwerk umfassend.

8. Verfahren, das durch eine elektronische Schaltung einer Schnittstellenvorrichtung (NFC) eines Fernauslesegerätes (30) nach einem der Ansprüche 1 bis 6 umgesetzt wird, umfassend:
Ausführen der Lese- und/oder Schreibvorgänge im Speicher von Betriebsparameterwerten der Verarbeitungsmittel, wobei die Lese- und/oder Schreibvorgänge umfassen:
- Nach dem Empfangen durch die zweiten Funkfrequenzempfangsmittel der Schnittstellenvorrichtung (NFC) von Funkfrequenzsignalen, die Schreibbefehlsdaten (PMGR1) transportieren, die Betriebsparameterwerte der Verarbeitungsmittel umfassen, Vornehmen eines Schreibens der so empfangenen Werte in den Speicher (4), um den Betrieb der Verarbeitungsmittel (1) zu befehlen; und
- die Schnittstellenvorrichtung (NFC) nach Empfang eines elektromagnetischen Signals, welches Lesebefehlsdaten (data_req) transportiert, einen Lesevorgang der Betriebsparameterwerte vornimmt, die in dem nicht flüchtigen Speicher (4) abgespeichert sind, gefolgt von einem Erzeugungsvorgang eines Funkfrequenzsignals (REP) aus den so gelesenen Werten.

## Claims

1. Remote reading equipment (30) including
processing means (1) arranged to perform nominal operations of this equipment,
first radio frequency transmission and reception means (3) capable of being controlled by said processing means (1);
in which equipment the processing means are programmed to, in nominal operation, control said first radio frequency transmission and reception means (3) so as to initiate communications with the outside by controlling the transmission of a metering frame carrying metering data of a remote reading installation; said remote reading equipment (30) further comprising :
energy storage means (2) for supplying energy to the processing means,
a box, inside which the processing means and the energy storage means are installed, said box being shaped to prevent physical access, i.e. both physical and wired, to said processing means and said energy storage means, i.e. the box is designed so that opening it causes irreversible effects and is shaped so that the equipment is devoid of wired connection means between the processing means or the storage means and the outside;
a memory (4) separate from the processing means and in communication with said processing means, for storing values of operating parameters of the processing means;
the processing means (1) being arranged, in nominal mode, to regularly carry out writing operations in the memory (4) of operating parameter values, said values written in the memory (4) comprising count data values measured by a counting module (31) in communication with the processing means (1), and received by said processing means;
said equipment (30) also includes an interface device (NFC) comprising second radio frequency reception means and an electronic circuit capable of operating using the energy from said second radio frequency reception means, to perform memory reading and/or writing operations;
said equipment (30) being arranged so that:
- following the reception by the second radio frequency reception means of the interface device (NFC), of radio frequency signals carrying write control data (PMGR1) comprising values of operating parameters of the processing means, said electronic circuit of said interface device (NFC) proceeds to write the values thus received into the memory (4), in order to control the operation of the processing means (1), the values thus written into the memory (4) comprising a date of passage into a nominal operating mode in which the processing means perform the nominal operations; and
- following the reception of an electromagnetic signal carrying read control data (data_req), the interface device (NFC) performs an operation of reading the values of operating parameters stored in the memory (4), then an operation of generating a radio frequency signal (REP) from the values thus read.

2. The equipment (30) of claim 1, wherein the memory (4) is non-volatile memory.

3. The equipment (30) according to any one of claims 1 or 2, wherein the interface device (NFC) comprises a near field communication interface.

4. Equipment (30) according to any of the preceding claims, wherein the memory (4) is in wired communication with the processing means (1).

5. Equipment (30) according to any one of the preceding claims, said equipment being arranged so that the operating parameters stored in the memory (4) include at least one parameter relating to the actual use of the equipment, so that reading of said at least one parameter can facilitate a diagnosis of equipment failure.

6. The equipment (30) according to any of the preceding claims, wherein said equipment further comprises a metering module (31) for measuring fluid or electricity consumption.

7. A remote meter reading installation comprising a plurality of equipment (30) according to claim 6, and at least one gateway system in communication on the one hand with at least one piece of equipment, and on the other hand with a telecommunications network.

8. A method implemented by an electronic circuit of an interface device (NFC) of a remote reading equipment (30) according to any of claims 1 to 6, comprising:
performing read and/or write operations on the memory of values of operating parameters of said processing means, said read and/or write operations comprising :
- following the reception by the second radio frequency reception means of the interface device (NFC) of radio frequency signals carrying write control data (PMGR1) comprising values of operating parameters of the processing means, proceeding with a writing of the values thus received in the memory (4), in order to control the operation of the processing means (1); and
- following the reception of an electromagnetic signal carrying read control data (data_req), the interface device (NFC) performs an operation of reading the values of operating parameters stored in the non-volatile memory (4), then an operation of generating a radio frequency signal (REP) from the values thus read.
